(19) Europäisches Patentamt
European Patent Office
Office européen des brevets

(11) EP 4 759 842 A1

(12) EUROPEAN PATENT APPLICATION
published in accordance with Art. 153(4) EPC

(43) Date of publication:
17.06.2026 Bulletin 2026/25

(21) Application number: 24851796.3

(22) Date of filing: 05.08.2024

(51) International Patent Classification (IPC):
*C08F 218/04* (2006.01) *C08F 8/12* (2006.01)
*C08F 220/00* (2006.01) *C08L 29/04* (2006.01)

(52) Cooperative Patent Classification (CPC):
C08F 8/12; C08F 218/04; C08F 220/00; C08L 29/04

(86) International application number:
PCT/JP2024/027839

(87) International publication number:
WO 2025/033372 (13.02.2025 Gazette 2025/07)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(30) Priority: 07.08.2023 JP 2023128533

(71) Applicant: Kuraray Co., Ltd.
Kurashiki-shi, Okayama 710-0801 (JP)

(72) Inventors:
- OKAMOTO Yuji
Bangrak, Bangkok 10500 (TH)
- KATO Masaki
Houston, Texas 77058 (US)

(74) Representative: Müller-Boré & Partner
Patentanwälte PartG mbB
Friedenheimer Brücke 21
80639 München (DE)

# (54) AQUEOUS SOLUTION AND DISPERSANT FOR SUSPENSION POLYMERIZATION

(57) Provided are an aqueous solution having high concentration and sufficiently low viscosity, and the like. The aqueous solution comprises a polymer (A) comprising a vinyl ester unit and a structural unit derived from a monomer (M), wherein the monomer (M) is a monomer represented by the following formula (1), and a content of the polymer (A) is 15% by mass or more. In the formula (1), $R^1$ represents a hydrogen atom or a methyl group; and X represents a hydroxy group, an amino group, a morpholino group, or a polyethylene glycol group.

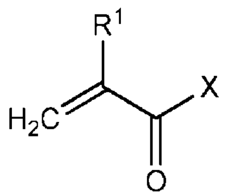

(1)

EP 4 759 842 A1

## Description

[TECHNICAL FIELD]

The present invention relates to an aqueous solution, and a dispersant for suspension polymerization.

[BACKGROUND ART]

Polyvinyl alcohol polymers (hereinafter, may be referred to as "PVAs") are, in general, polymers obtained by saponifying a vinyl ester polymer. These polymers are used for a variety of intended usages such as: materials of films and fibers; additives for paper processing and fiber processing; adhesives; binders for inorganic substances; and dispersants for suspension polymerization (may be also referred to as "dispersion stabilizers", etc.) Patent Document 1 discloses a dispersant for suspension polymerization, the dispersant being powder comprising PVA having a certain end structure.

[PRIOR ART DOCUMENTS]

[Patent Documents]

Patent Document 1: PCT International Publication No. 2021/100638

[SUMMARY OF THE INVENTION]

[Problems to be Solved by the Invention]

Polymers such as PVAs may be stored, distributed, sold, or used, etc., in states of aqueous solutions. In storage, use and the like of a polymer as an aqueous solution, the aqueous solution is required to be highly concentrated and have low viscosity, particularly in light of productivity and handleability. However, there may be cases in which preparation per se of a high-concentration aqueous solution is impossible, owing to structures and/or the like of the polymer. Furthermore, in general, since viscosity increases as concentration increases, it is difficult to prepare an aqueous solution in which high concentration and low viscosity are both achieved.

One object of the present invention is to provide an aqueous solution having a high concentration and sufficiently low viscosity.

Furthermore, another object of the present invention is to provide a dispersant for suspension polymerization in which the aqueous solution described above is employed and which has favorable performance.

[Means for Solving the Problems]

The above-described objects are achieved by providing any one of the followings.

(1) An aqueous solution comprising a polymer (A) comprising a vinyl ester unit and a structural unit derived from a monomer (M), wherein the monomer (M) is a monomer represented by the following formula (1), and a content of the polymer (A) is 15% by mass or more,

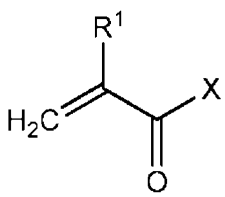

( 1 )

wherein, in the formula (1), $R^1$ represents a hydrogen atom or a methyl group; and X represents a hydroxy group, an amino group, a morpholino group, or a polyethylene glycol group;

(2) The aqueous solution according to (1), wherein a content of the structural unit derived from the monomer (M) in the polymer (A) is more than 8 mol% and 70 mol% or less with respect to total structural units;

(3) The aqueous solution according to (1) or (2), wherein a solution obtained by dissolving 40 parts by mass of the polymer (A) in 60 parts by mass of water has a viscosity at 20 °C of 2,000 mPa·s or less;

(4) The aqueous solution according to any one of (1) to (3), wherein the polymer (A) comprises a vinyl alcohol unit and

has a degree of saponification of less than 70 mol%, or the polymer (A) does not comprise a vinyl alcohol unit;
(5) The aqueous solution according to any one of (1) to (4), wherein the polymer (A) has a viscosity-average degree of polymerization of 30 to 2,000;
(6) The aqueous solution according to any one of (1) to (5), wherein a total content of: the vinyl ester unit in the polymer (A); the structural unit derived from the monomer (M); and a vinyl alcohol unit which is an arbitrary structural unit is 90 mol% or more with respect to total structural units of the polymer (A) the vinyl ester unit in the polymer (A);
(7) The aqueous solution according to any one of (1) to (6), having a viscosity at 20 °C of 2,000 mPa·s or less;
(8) The aqueous solution according to any one of (1) to (7), wherein a content of the polymer (A) with respect to a total amount of solid matter is 90% by mass or more;
(9) A dispersant for suspension polymerization comprising the aqueous solution according to any one of (1) to (8);
(10) A dispersant for suspension polymerization which comprises an aqueous solution comprising a polymer (A) comprising a vinyl ester unit and a structural unit derived from a monomer (M), wherein the monomer (M) is at least one selected from the group consisting of a monomer represented by the following formula (1) and a monomer represented by the following formula (2), and a content of the polymer (A) in the aqueous solution is 15% by mass or more,

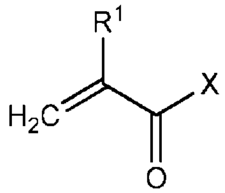
(1)

wherein, in the formula (1), $R^1$ represents a hydrogen atom or a methyl group; and X represents a hydroxy group, an amino group, a morpholino group, or a polyethylene glycol group, and

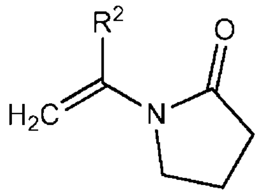
(2)

in the formula (2), $R^2$ represents a hydrogen atom or a methyl group.

[Effects of the Invention]

The present invention enables providing an aqueous solution having high concentration and sufficiently low viscosity.
Furthermore, the present invention enables providing a dispersant for suspension polymerization in which an aqueous solution having high concentration and sufficiently low viscosity is employed and which has favorable performance.

[DESCRIPTION OF EMBODIMENTS]

In the present description, numerical value ranges described using "to" mean that numerical values before and after "to" are included as the lower limit value and the upper limit value, respectively. More specifically, "α to β" means "α or more and β or less". Furthermore, in the present description, the upper limit value and the lower limit value of the numerical value range can be combined ad libitum.

Aqueous Solution

The aqueous solution according to one embodiment of the present invention comprises a vinyl ester unit and a structural unit derived from a monomer (M), wherein the monomer (M) is a monomer represented by the formula (1) described later, and a content of the polymer (A) is 15% by mass or more.
In the aqueous solution according to one embodiment of the present invention, the content of the polymer (A) is 15% by mass or more, being a high concentration. Despite having a high concentration, the aqueous solution has

sufficiently low viscosity, due to the polymer (A) having a structural unit derived from a monomer (M) represented by the following formula (1). Therefore, the aqueous solution is superior in productivity, handleability, and the like. In addition, the aqueous solution is also favorable in performance as a dispersant for suspension polymerization. Specifically, by using the aqueous solution for suspension polymerization, as a dispersant, polymer particles having a small average particle diameter and being favorable in plasticizer absorptivity can be obtained. Since the aqueous solution is a liquid, it is not necessary to dissolve the polymer (A) when used as the dispersant for suspension polymerization, thereby leading to superior handleability.

It is to be noted that water solubility of the polymer (A), and physical properties of the aqueous solution obtained may be affected by the degree of polymerization of the polymer (A). However, even in the case in which the polymer (A) having a large degree of polymerization is used, a viscosity reducing effect is produced compared to a polymer having a similar level of degree of polymerization. Therefore, in the present specification, the problem is considered to be solved in cases in which an aqueous solution having a sufficiently low viscosity is obtained when compared with polymers having a similar level of degree of polymerization.

The aqueous solution according to one embodiment of the present invention comprises the polymer (A) and water (B). The aqueous solution may further comprise other component(s), aside from the polymer (A) and water (B). Each component and the like of the aqueous solution is described in detail below.

Polymer (A)

The polymer (A) comprises a vinyl ester unit, and a structural unit derived from a monomer (M).

The vinyl ester unit is a structural unit formed by polymerizing a vinyl ester monomer. Examples of the vinyl ester monomer include carboxylic acid vinyl esters such as vinyl formate, vinyl acetate, vinyl propionate, vinyl valerate, vinyl caprate, vinyl laurate, vinyl stearate, vinyl benzoate, vinyl pivalate, and vinyl versatate. Of these, vinyl acetate is preferred.

The vinyl ester unit may be a structural unit represented by $-CH_2-CH(OCOR)-$(wherein, R represents a hydrogen atom or a hydrocarbon group having 1 to 20 carbon atoms). R represents preferably a hydrocarbon group, more preferably an aliphatic hydrocarbon group, and still more preferably an alkyl group. The number of carbon atoms of R is preferably 1 to 6, and more preferably 1 to 3. It is particularly preferred that R represents a methyl group.

The lower limit of the content of the vinyl ester unit in the polymer (A) with respect to the total structural units is preferably 10 mol%, more preferably 20 mol%, and still more preferably 30 mol%, or may be 40 mol%, 50 mol%, 60 mol%, or 70 mol%. When the content of the vinyl ester unit is equal to or more than the lower limit, the performance as a dispersant for suspension polymerization tends to be more favorable. The upper limit of the content of the vinyl ester unit in the polymer (A) with respect to the total structural units is preferably 90 mol%, or may be 80 mol%, 70 mol%, or 60 mol%. When the content of the vinyl ester unit is equal to or less than the upper limit, the water solubility increases, and the aqueous solution obtained tends to have a reduced viscosity.

The polymer (A) comprises the structural unit derived from the monomer (M). The monomer (M) is a monomer represented by the following formula (1).

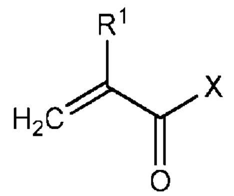

(1)

In the formula (1), $R^1$ represents a hydrogen atom or a methyl group; and X represents a hydroxy group, an amino group, a morpholino group, or a polyethylene glycol group.

It is considered that the polymer (A) has high water solubility, and the viscosity of the aqueous solution obtained can be reduced, due to comprising the structural unit derived from the monomer (M) having such a specified polar group.

$R^1$ represents preferably a hydrogen atom.

The polyethylene glycol group as X may be a group represented by $-O-(CH_2CH_2O)_n-H$ (wherein n is the number of 1 or more and 20 or less). n is an averaged value and may not be an integer. The upper limit of n is preferably 10, more preferably 6, and still more preferably 4. When n is equal to or less than the upper limit, viscosity of the aqueous solution can be more reduced, and plasticizer absorptivity in use as a dispersant for suspension polymerization may be superior. On the other hand, in light of a decrease in average particle diameter of the resultant polymer when used as a dispersant for suspension polymerization, the lower limit of n is preferably 3, and more preferably 4.

X represents preferably a hydroxy group, a morpholino group, or a polyethylene glycol group, more preferably a morpholino group or polyethylene glycol group, and still more preferably a morpholino group. In the case in which X represents a morpholino group, the viscosity of the aqueous solution can be more reduced, and also the performance as a

dispersant for suspension polymerization may be particularly favorable. It is to be noted that the morpholino group as referred to herein means a substituent, falling under morpholine from which hydrogen of the secondary amine is removed.

The content of the structural unit derived from the monomer (M) in the polymer (A), with respect to the total structural units, may be, for example, 3 mol% or more, and is preferably more than 8 mol%. The lower limit of the content of the may be 10 mol%, 15 mol%, 20 mol%, 25 mol%, or 30 mol%. The upper limit of the content of the structural unit derived from the monomer (M) in the polymer (A), with respect to the total structural units, is preferably 70 mol%, or may be 60 mol% or 50 mol%. By increasing the content of the structural unit derived from the monomer (M), the aqueous solution tends to have a further reduced viscosity. Furthermore, when the content of the structural unit derived from the monomer (M) falls within the above range, the performance as a dispersant for suspension polymerization may be more favorable. It is to be noted that the content of the structural unit derived from the monomer (M), with respect to the total structural units, in the polymer (A) may be also referred to as a degree of modification (mol%).

The polymer (A) may or may not further comprise a vinyl alcohol unit ($-CH_2-CH(OH)-$). The vinyl alcohol unit is typically formed by saponifying a vinyl ester unit. In the case in which the polymer (A) comprises a vinyl alcohol unit, the water solubility increases, and the viscosity of the aqueous solution tends to be more reduced.

In one embodiment of the present invention, it is preferred that the polymer (A) comprises a vinyl alcohol unit and the degree of saponification is less than 70 mol%, or that the polymer (A) does not comprise the vinyl alcohol unit. The degree of saponification as referred to herein means a proportion (mol%) of the vinyl alcohol unit with respect to the total number of moles of the vinyl ester unit and the vinyl alcohol unit. In other words, the degree of saponification of the polymer (A) may be 0 mol% or more and less than 70 mol%. In such a case, the balance of hydrophilicity and hydrophobicity in the polymer (A) becomes appropriate, and due to an improvement of the function as the surfactant, and the like, the performance as a dispersant for suspension polymerization may be more favorable. The upper limit of the degree of saponification of the polymer (A) may be 60 mol%, 50 mol%, 40 mol%, 30 mol%, 20 mol%, or 10 mol%. The lower limit of the degree of saponification of the polymer (A) may be 1 mol%, 10 mol%, 30 mol%, or 50 mol%. The degree of saponification is a value measured in accordance with a method described in JIS K6726: 1994.

The upper limit of the content of the vinyl alcohol unit in the polymer (A), with respect to the total structural units, is preferably 70 mol% and more preferably 65 mol%, or may be 60 mol%, 50 mol%, 40 mol%, 30 mol%, 20 mol%, or 10 mol%. The lower limit of the content of the vinyl alcohol unit in the polymer (A), with respect to the total structural units, may be 0 mol%.

The lower limit of the total content of the structural unit derived from the monomer (M) and the vinyl alcohol unit in the polymer (A), with respect to the total structural units, is preferably 10 mol%, more preferably 20 mol%, and still more preferably 30 mol%. When the total content of these structural units having specified polar groups is equal to or more than the lower limit, water solubility of the polymer (A) tends to be more increased. The upper limit of the total content of the structural unit derived from the monomer (M) and the vinyl alcohol unit in the polymer (A), with respect to the total structural units, is preferably 80 mol%, more preferably 75 mol%, and still more preferably 70 mol%, or may be 65 mol%, 60 mol%, 55 mol%, or 50 mol%.

The polymer (A) may further comprise other structural unit(s) aside from the vinyl ester unit, the structural unit derived from the monomer (M), and the vinyl alcohol unit which is an arbitrary structural unit. Examples of the monomer that gives the other structural unit include: $\alpha$-olefins such as ethylene, propylene, 1-butene, isobutene, and 1-hexene; acrylic acid esters such as methyl acrylate and ethyl acrylate; methacrylic acid esters such as methyl methacrylate and ethyl methacrylate; acrylamide derivatives such as N-methylacrylamide and N-ethylacrylamide; methacrylamide derivatives such as N-methylmethacrylamide and N-ethylmethacrylamide; vinyl ethers such as methyl vinyl ether, ethyl vinyl ether, n-propyl vinyl ether, isopropyl vinyl ether, and n-butyl vinyl ether; hydroxy group-containing vinyl ethers such as ethylene glycol vinyl ether, 1,3-propanediol vinyl ether, and 1,4-butanediol vinyl ether; allyl acetate; allyl ethers such as propyl allyl ether, butyl allyl ether, and hexyl allyl ether; isopropenyl acetate; hydroxy group-containing $\alpha$-olefins such as 3-buten-1-ol, 4-penten-1-ol, 5-hexen-1-ol, 7-octen-1-ol, 9-decen-1-ol, and 3-methyl-3-buten-1-ol; monomers having a silyl group, such as vinyltrimethoxysilane, vinylmethyldimethoxysilane, vinyldimethylmethoxysilane, vinyltriethoxysilane, vinylmethyldiethoxysilane, vinyldimethylethoxysilane, 3-(meth)acrylamidepropyltrimethoxysilane, and 3-(meth)acrylamidepropyltriethoxysilane; and the like.

The lower limit of the total content of the vinyl ester unit, the structural unit derived from the monomer (M), and the vinyl alcohol unit which is an arbitrary structural unit in the polymer (A) is, with respect to the total structural units of the polymer (A), preferably 90 mol%, more preferably 95 mol%, and still more preferably 99 mol%, or may be 99.9 mol%. In the case in which the content of the other structural unit(s) aside from the vinyl ester unit, the structural unit derived from the monomer (M), and the vinyl alcohol unit which is an arbitrary structural unit is thus low, the viscosity of the aqueous solution may be more reduced, and the performance as a dispersant for suspension polymerization tends to be more enhanced. The upper limit of the total content of the vinyl ester unit, the structural unit derived from the monomer (M), and the vinyl alcohol unit which is an arbitrary structural unit in the polymer (A) may be 100 mol% with respect to the total structural units of the polymer (A).

The lower limit of the viscosity-average degree of polymerization of the polymer (A) is preferably 30, more

preferably 50, and still more preferably 100. The upper limit of the viscosity-average degree of polymerization of the polymer (A) is preferably 2,000, more preferably 1,200, still more preferably 600, even more preferably 400, and particularly preferably 300. When the viscosity-average degree of polymerization of the polymer (A) falls within the above range, the viscosity of the aqueous solution may be more reduced, and the performance as a dispersant for suspension polymerization tends to be more enhanced. The viscosity-average degree of polymerization of the polymer (A) is a value measured in accordance with JIS K6726: 1994.

When 15 parts by mass of the polymer (A) are dissolved in 85 parts by mass of water, the polymer (A) resulting in the viscosity at 20 °C of 3,000 mPa·s or less is preferred, and more preferably, resulting in the viscosity of 2,000 mPa·s or less. In other words, the viscosity at 20 °C of an aqueous solution of the polymer (A) at a concentration of 15% by mass is preferably 3,000 mPa·s or less, and more preferably 2,000 mPa·s or less. Furthermore, when 40 parts by mass of the polymer (A) are dissolved in 60 parts by mass of water, the polymer (A) resulting in the viscosity at 20 °C of 2,000 mPa·s or less is preferred, and more preferably, resulting in the viscosity of 1,500 mPa·s or less. In other words, the viscosity at 20 °C of an aqueous solution of the polymer (A) at a concentration of 40% by mass is preferably 2,000 mPa·s or less, and more preferably 1,500 mPa·s or less. By using such a polymer (A), the viscosity of the aqueous solution can be particularly sufficiently reduced. The viscosity at 20 °C when 15 parts by mass of the polymer (A) are dissolved in 85 parts by mass of water, and the viscosity at 20 °C when 40 parts by mass of the polymer (A) are dissolved in 60 parts by mass of water may be 10 mPa·s or more, or 100 mPa·s or more, or may be 300 mPa·s or more.

The viscosity is defined as a value measured by using a B-type viscometer (spindle: LV-03 to LV-04) under a condition involving the number of rotor revolution of 60 rpm, and a temperature of 20 °C.

The polymer (A) is preferably a random copolymer of a vinyl ester monomer and the monomer (M), or a saponification product of this random copolymer. In other words, it is preferred that the polymer (A) has a structure in which the structural unit derived from the monomer (M) are present at random. In such a cases, a water solubility-improving effect and a viscosity-reducing effect due to the structural unit derived from the monomer (M) can be particularly sufficiently exerted. The random copolymer may include other monomer(s) aside from the vinyl ester monomer and the monomer (M) by random copolymerization. The random copolymer of the vinyl ester monomer and the monomer (M) can be produced by a procedure or the like in which each monomer as described later is subjected to radical copolymerization.

In the case in which the polymer (A) is a saponification product of the random copolymer of the vinyl ester monomer and the monomer (M), this saponification product is preferably an alkaline saponification product. In general, PVA obtained by alkaline saponification tends to have inferior randomness of the vinyl alcohol unit and low water solubility, and result in a high viscosity of the aqueous solution to be obtained. Therefore, in the case in which the present invention is applied to the alkaline saponification product, the water solubility increases, whereby an advantage of enabling the reduction in viscosity of the resultant aqueous solution to be contemplated may be particularly prominently achieved.

The aqueous solution according to one embodiment of the present invention may comprise one type, or two or more types of the polymer (A).

The lower limit of the content of the polymer (A) in the aqueous solution according to one embodiment of the present invention may be 15% by mass, and is preferably 20% by mass and more preferably 25% by mass, or may be still more preferably 30% by mass, 35% by mass, or 40% by mass. When the content of the polymer (A) is equal to or more than the lower limit, a high-concentration aqueous solution is provided, thereby enabling efficient distribution, storage, and the like to be performed. The upper limit of the content of the polymer (A) may be 70% by mass, or may be 60% by mass, 50% by mass, 45% by mass, or 40% by mass. When the content of the polymer (A) is equal to or less than the upper limit, e.g., reduction in viscosity of the aqueous solution can be contemplated.

Process for Producing Polymer (A)

The polymer (A) can be produced by, for example, copolymerizing a vinyl ester monomer and the monomer (M), and as needed, saponifying the copolymer thus obtained. The saponification may not be carried out. The copolymerization of the vinyl ester monomer and the monomer (M) is preferably random copolymerization.

The procedure of polymerizing the vinyl ester monomer and the monomer (M) is exemplified by a well-known procedure such as a bulk polymerization procedure, a solution polymerization procedure, a suspension polymerization procedure, an emulsion polymerization procedure, and the like. Of these procedures, the bulk polymerization procedure performed without a solvent or the solution polymerization procedure performed with a solvent such as an alcohol or the like are preferred, and the solution polymerization procedure in which the polymerization is performed in the presence of a lower alcohol is more preferred. The lower alcohol is preferably an alcohol having 3 or fewer carbon atoms; more preferably methanol, ethanol, n-propanol, or isopropanol; and still more preferably methanol. In carrying out a polymerization reaction by the bulk polymerization procedure or the solution polymerization procedure, in terms of a reaction system, either of a batchwise system or a continuous system can be employed.

Examples of the polymerization initiator for use in the polymerization reaction include well-known polymerization initiators, e.g., azo initiators such as 2,2'-azobisisobutyronitrile, 2,2'-azobis(2,4-dimethylvaleronitrile), and 2,2'-azobis(4-methoxy-2,4-dimethylvaleronitrile); organic peroxide initiators such as benzoyl peroxide, n-propyl peroxycarbonate, cumyl peroxyneodecanoate, and t-butyl peroxyneodecanoate; and the like. The polymerization temperature when conducting the polymerization reaction is not particularly limited, and preferably falls within the range of 5 °C or more and 200 °C or less.

In copolymerizing the vinyl ester monomer and the monomer (M), a copolymerizable other monomer(s) may be further copolymerized. Examples of the other monomer include those exemplified for the monomer that gives the other structural unit, and the like.

Upon copolymerization, a certain chain transfer agent may be coexisted. Examples of the chain transfer agent include: aldehydes such as acetaldehyde, propionaldehyde, and butylaldehyde; ketones such as acetone and methyl ethyl ketone; mercaptans such as 2-hydroxyethanethiol and 3-mercaptopropionic acid; thiocarboxylic acids such as thioacetic acid; halogenated hydrocarbons such as trichloroethylene and perchloroethylene; and the like.

The saponification of the copolymer thus obtained can be execute by, for example, subjecting the vinyl ester polymer to a treatment using an alkali catalyst or an acid catalyst, in an alcohol solution. For the saponification reaction of the vinyl ester polymer, an alcoholysis or hydrolysis reaction using a conventionally well-known alkali catalyst such as sodium hydroxide, potassium hydroxide, or sodium methoxide, or an acid catalyst such as p-toluenesulfonic acid can be adopted. Examples of the solvent to be used in the saponification reaction include: alcohols such as methanol and ethanol; esters such as methyl acetate and ethyl acetate; ketones such as acetone and methyl ethyl ketone; aromatic hydrocarbons such as benzene and toluene; and the like. These can be used alone, or as a combination of two or more types thereof. Of these, due to convenience, it is preferred to use as the solvent, methanol or a mixed solution of methanol and methyl acetate, and to conduct the saponification reaction in the presence of sodium hydroxide that serves as the alkali catalyst. The saponification can be carried out with a belt-type reactor, a kneader-type reactor, a tower-type reactor, or the like.

The PVA (A) obtained via saponification or without saponification may be subjected to a washing treatment or drying treatment.

Water (B) and Other Component, and the like

The aqueous solution according to one embodiment of the present invention comprises water (B) that serves as a solvent. Moreover, examples of the other component aside from the polymer (A) and water (B) which may be comprised in the aqueous solution include solid matter other than the polymer (A), solvents other than the water (B), and the like. The solid matter other than the polymer (A) is exemplified by a resin aside from the PVA (A), a surfactant, a plasticizer, each compound used in production, and the like. The solvent other than the water (B) is exemplified by alcohols such as ethanol. The solid matter as referred to herein means a component aside from the water (B) and other solvent(s). The solid matter may be a component which is in a solid state at 20 °C.

The lower limit of the content of the polymer (A) with respect to the total amount of the solid matter in the aqueous solution according to one embodiment of the present invention is preferably 90% by mass and more preferably 95% by mass, or may be 99% by mass. Due to the main solid matter being the polymer (A) in the aqueous solution, the viscosity can be more reduced, and performance as a dispersant for suspension polymerization tends to be more favorable. The upper limit of the content of the polymer (A) with respect to the total amount of the solid matter in the aqueous solution may be 100% by mass, may be 99.9% by mass, or may be 99% by mass.

The aqueous solution according to one embodiment of the present invention may comprise insoluble matter. The upper limit of the content of the insoluble matter in the aqueous solution is preferably 0.1% by mass, and more preferably 0.01% by mass. The insoluble matter may be a part of the polymer (A), or may be other component not originally having water solubility, and/or the like.

The upper limit of the viscosity at 20 °C of the aqueous solution according to one embodiment of the present invention may be, for example, 10,000 mPa·s, may be 4,000 mPa·s, may be 3,000 mPa·s, or may be 2,500 mPa·s, and is preferably 2,000 mPa·s, more preferably 1,800 mPa·s, still more preferably 1,700 mPa·s, and particularly preferably 1,500 mPa·s. When the viscosity of the aqueous solution is equal to or less than the upper limit, enhancing handleability and the like can be realized. The lower limit of the viscosity may be 10 mPa·s, or may be 100 mPa·s or 300 mPa·s.

The aqueous solution according to one embodiment of the present invention can be suitably used as a dispersant for suspension polymerization. The aqueous solution may be used for other intended usage aside from the dispersant for suspension polymerization. The aqueous solution may be used as a dispersant for emulsion polymerization, or may be used for other intended usage aside from the dispersant. The other intended usage aside from the dispersant is exemplified by intended usage similar to each of intended usages of conventional PVAs and vinyl ester polymers, such as: materials of films and fibers; additives for paper processing and fiber processing; adhesives; and binders for inorganic substances.

Preparation of Aqueous Solution

The procedure of preparing the aqueous solution according to one embodiment of the present invention is not particularly limited. The aqueous solution can be obtained by, for example, adding the polymer (A) to the water (B), and dissolving the polymer (A). The polymer (A) may be added in multiple portions. Also, other component(s) may be further added, and heating may be conducted in the dissolving.

Dispersant for Suspension Polymerization

The dispersant for suspension polymerization (X) according to one embodiment of the present invention comprises the aqueous solution according to one embodiment of the present invention, described above. The dispersant for suspension polymerization (X) may further comprise other component(s) aside from the aqueous solution according to one embodiment of the present invention. The dispersant for suspension polymerization (X) may be the aqueous solution according to one embodiment of the present invention.

The dispersant for suspension polymerization (Y) according to other embodiment of the present invention comprises an aqueous solution comprising a polymer (A) comprising a vinyl ester unit and a structural unit derived from a monomer (M), wherein the monomer (M) is at least one selected from the group consisting of a monomer represented by the following formula (1) and a monomer represented by the following formula (2), and a content of the polymer (A) in the aqueous solution is 15% by mass or more.

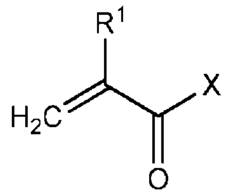

(1)

In the formula (1), $R^1$ represents a hydrogen atom or a methyl group; and X represents a hydroxy group, an amino group, a morpholino group, or a polyethylene glycol group.

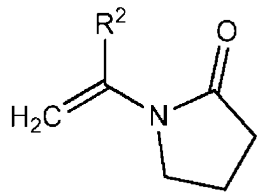

(2)

In the formula (2), $R^2$ represents a hydrogen atom or a methyl group.

Specific modes and suitable modes of the aqueous solution comprised in the dispersant for suspension polymerization (Y) are similar to specific modes and suitable modes of the aqueous solution according to one embodiment of the present invention described above, except that the monomer (M) may be a monomer represented by the formula (2).

It is preferred that $R^2$ represents a hydrogen atom.

In the dispersant for suspension polymerization (Y), the monomer (M) is preferably: a monomer represented by the formula (1), wherein X represents a morpholino group or a polyethylene glycol group; or a monomer represented by the formula (2), and more preferably: a monomer represented by the formula (1), wherein X represents a morpholino group; or a monomer represented by the formula (2).

The dispersant for suspension polymerization (Y) may further comprise other component(s) (for example, other polymer(s), etc.) aside from the aqueous solution described above. The dispersant for suspension polymerization (Y) may be the aqueous solution described above.

The dispersant for suspension polymerization (X) and the dispersant for suspension polymerization (Y) according to embodiments of the present invention (hereinafter, the dispersant for suspension polymerization (X) and the dispersant for suspension polymerization (Y) may be abbreviated to "dispersant") are superior in performance as a dispersant for suspension polymerization. The dispersant is suitable as a dispersant for suspension polymerization of a vinyl compound, and polymer particles having a small average particle diameter can be efficiently obtained. Furthermore, the polymer particles obtained by suspension polymerization using the dispersant are also favorable in plasticizer absorptivity.

The dispersant is typically in a liquid form. The lower limit of the content of the polymer (A) in the dispersant is preferably 10% by mass, more preferably 15% by mass, and still more preferably 20% by mass, or may be even more preferably 25 mass%, 30% by mass, 35% by mass, or 40% by mass. When the content of the polymer (A) is equal to or more than the lower limit, a high-concentration dispersant is provided, thereby enabling efficient distribution, storage, and the like to be performed. The upper limit of the content of the polymer (A) in the dispersant may be 70% by mass, or may be 60% by mass, 50% by mass, or 40% by mass. When the content of the polymer (A) is equal to or less than the upper limit, e.g., reduction in viscosity of the dispersant can be contemplated. The dispersant can also be used after dilution.

The aqueous solution which comprises the polymer (A) and which is comprised in the dispersant may be an aqueous solution consisting only of the polymer (A) and the water (B). In other words, component(s) other than the polymer (A) and water (B) in the dispersant may be any component other than the aqueous solution. More specifically, in the dispersant, the lower limit of a ratio (A/ (A + B)) of the content of the polymer (A) to the total content of the polymer (A) and water (B) may be 15% by mass, or may be 20% by mass, 25% by mass, 30% by mass, 35% by mass, or 40% by mass. The upper limit of the ratio (A/ (A + B)) may be 70% by mass, or may be 60% by mass, 50% by mass, or 40% by mass.

The upper limit of the viscosity at 20 °C of the dispersant may be, for example, 10,000 mPa·s, may be 4,000 mPa·s, may be 3,000 mPa·s, or may be 2,500 mPa·s, and is preferably 2,000 mPa·s, more preferably 1,800 mPa·s, still more preferably 1,700 mPa·s, and particularly preferably 1,500 mPa·s. When the viscosity of the dispersant is equal to or less than the upper limit, improvement of handleability and the like can be achieved. The lower limit of the viscosity may be 10 mPa·s, or may be 100 mPa·s or 300 mPa·s.

The lower limit of the content of the polymer (A) with respect to the total amount of the solid matter in the dispersant according to an embodiment of the present invention is preferably 90% by mass and more preferably 95% by mass, or may be 99% by mass. Due to the main solid matter being the polymer (A) in the dispersant, the viscosity can be more reduced, and performance as a dispersant for suspension polymerization also tends to be more favorable. The upper limit of the content of the polymer (A) with respect to the total amount of the solid matter in the dispersant may be 100% by mass, may be 99.9% by mass, or may be 99% by mass.

The dispersant according to an embodiment of the present invention may comprise insoluble matter. The upper limit of the content of the insoluble matter in the dispersant is preferably 0.1% by mass, and more preferably 0.01% by mass. The insoluble matter may be a part of the polymer (A), or may be other component not originally having water solubility, and/or the like.

## Polymerization Procedure of Vinyl Compound

As a method in which the dispersant according to an embodiment of the present invention is used, a polymerization procedure of a vinyl compound is described below in which the dispersant is used. The polymerization procedure of the vinyl compound comprises a step of polymerizing a vinyl compound in the presence of the dispersant according to an embodiment of the present invention. The polymerization procedure is similar to polymerization procedures of vinyl compounds which are conventionally well-known, except that the dispersant according to an embodiment of the present invention is used as the dispersant.

In the polymerization procedure, a vinyl compound is typically subjected to suspension polymerization in an aqueous medium. As the aqueous medium, pure water, as well as an aqueous solution comprising any one of various types of additive components, or an aqueous medium comprising other organic solvent can be used. The dispersant is added to this aqueous medium. To the aqueous medium may further added a polymerization initiator and a vinyl compound, and suspension polymerization is performed with stirring.

The amount of the dispersant according to one embodiment of the present invention to be added in performing the suspension polymerization of the vinyl compound is not particularly limited, and on mass basis equivalent to the solid content with respect to the vinyl compound, preferably 1 ppm or more and 50,000 ppm or less, more preferably 10 ppm or more and 10,000 ppm or less, still more preferably 30 ppm or more and 5,000 ppm or less, and even more preferably 50 ppm or more and 1,000 ppm or less.

The dispersant according to an embodiment of the present invention may be used alone, or may be used in combination with other dispersant and/or the like. The other dispersant and/or the like are/is exemplified by various types of dispersants to be commonly employed in performing suspension polymerization of a vinyl compound in an aqueous medium. Specific examples include: water-soluble cellulose ethers such as methyl cellulose, hydroxyethyl cellulose, hydroxypropyl cellulose, and hydroxypropylmethyl cellulose; PVAs other than the polymer (A), water-soluble polymers such as gelatin; oil-soluble emulsifying agents such as sorbitan monolaurate, sorbitan trioleate, glycerin tristearate, and an ethylene oxide-propylene oxide block copolymer; water soluble emulsifying agents such as polyoxyethylene sorbitan monolaurate, polyoxyethylene glycerin oleate, and sodium laurate; and the like.

As a polymerization initiator to be used the polymerization procedure, a polymerization initiator which is conventionally used in polymerization of a vinyl compound may be used; and specifically, a polymerization initiator similar to those exemplified in relation to the polymerization of the vinyl ester monomer described above may be used.

In the polymerization procedure, other various types of additives may be added to the polymerization system as necessary. Examples of the additives include: polymerization modifiers such as aldehydes, halogenated hydrocarbons, and mercaptans; polymerization inhibitors such as phenol compounds, sulfur compounds, and N-oxide compounds; and the like. Furthermore, a pH adjusting agent, a scale inhibitor, a cross-linking agent, and/or the like may also be added. A plurality of the additives may be used in combination.

Examples of the vinyl compound which can be subjected to the suspension polymerization in the polymerization procedure of the present invention include: halogenated vinyls such as vinyl chloride; vinyl esters such as vinyl acetate and vinyl propionate; acrylic acid, methacrylic acid, and esters and salts thereof; maleic acid, fumaric acid, and esters and anhydrides thereof; styrene; acrylonitrile; vinylidene chloride; vinyl ether; and the like. Of these vinyl compounds, halogenated vinyls are preferred, and vinyl chloride is more preferred. The polymerization procedure is particularly suitable as a method for suspension polymerization of vinyl chloride alone, or a method for suspension polymerization of vinyl chloride and a monomer copolymerizable with vinyl chloride together. Examples of the monomer copolymerizable with vinyl chloride include: vinyl esters such as vinyl acetate and vinyl propionate; (meth)acrylic acid esters such as methyl (meth)acrylate and ethyl (meth)acrylate; $\alpha$-olefins such as ethylene and propylene; unsaturated dicarboxylic acids such as maleic anhydride and itaconic acid; acrylonitrile; styrene; vinylidene chloride; vinyl ether; and the like.

When the suspension polymerization of the vinyl compound is carried out in the polymerization procedure, a charging proportion of each component, a polymerization temperature, a polymerization time period, and the like may be similar to conditions that have been conventionally adopted in suspension polymerization of a vinyl compound. Furthermore, there is no limitation on a charging order and a ratio of the vinyl compound, the polymerization initiator, the dispersant, the aqueous medium, and the other additives.

In accordance with the polymerization procedure in which the dispersant according to an embodiment of the present invention is used, vinyl polymer particles having a small average particle diameter can be efficiently obtained. Furthermore, the vinyl polymer particles obtained by the polymerization procedure are favorable also in plasticizer absorptivity.

## EXAMPLES

Hereinafter, the present invention is explained in more detail by way of Examples, but the present invention is not in any way limited to these Examples. Physical property values of the polymer (A) were measured in accordance with the following method.

### Viscosity-Average Degree of Polymerization

In the case in which the polymer (A) is PVA, a solution in methanol of polyvinyl acetate (PVAc) before subjecting to the saponification reaction, which had been obtained previously, from which unreacted vinyl acetate was eliminated, was charged into n-hexane to allow for precipitation of the PVAc. In the case in which the polymer (A) was PVAc, the resultant PVAc was used. Purification by reprecipitation in which the PVAc was dissolved in acetone was conducted three times, followed by drying under reduced pressure at 60 °C, whereby a purified product of the PVAc was obtained. After a solution in methanol of the purified product of the PVAc was subjected to saponification at the alkali molar ratio of 0.2, Soxhlet extraction with methanol was performed for 3 days, and then drying gave the purified product of the PVA. The degree of polymerization (viscosity-average degree of polymerization) of the PVA thus obtained was measured in accordance with JIS K6726: 1994.

### Content of Structural Units Derived from Monomer (M) (Conversion)

The content of the structural unit derived from the monomer (M) in the polymer (A) (conversion: degree of modification (mol%)) was calculated from the spectrum of modified species by a $^1$H-NMR spectrum analysis.

### Degree of Saponification

The degree of saponification of the polymer (A) was measured in accordance with JIS K6726: 1994.

### Production Example 1: Production of PVAc-1

Into a 3-L reaction chamber equipped with a stirrer, a reflux condenser, a nitrogen feed port, an additive addition port, and an initiator addition port were charged 300.0 parts by mass of vinyl acetate, 178.3 parts by mass of acryloylmorpholine as the monomer (M), and 1,200.0 parts by mass of methanol, and after the temperature was raised to 60 °C, replacement with nitrogen gas in the system was carried out by nitrogen bubbling for 30 min. Polymerization was

started by adding 4.0 parts by mass of 2,2'-azobis(4-methoxy-2,4-dimethylvaleronitrile) (AIBN). During the polymerization, the polymerization temperature of 60 °C was maintained, and after 4 hours when the degree of polymerization reached 50%, the polymerization was stopped by cooling. Next, unreacted vinyl acetate was eliminated under reduced pressure to give a solution of polyvinyl acetate in methanol. The solution of polyvinyl acetate in methanol was charged into n-hexane to allow for precipitation of polyvinyl acetate. Washing and drying of the precipitated matter gave powder of polyvinyl acetate (PVAc-1). Physical properties of the PVAc-1 are shown in Table 2.

Production Examples 2 to 8, Comparative Production Examples 1, 2: Production of PVAc-2 to PVAc-10

PVAc-2 to PVAc-10 were each produced by a similar procedure to that of Production Example 1, except that the type of the monomer (M), using amount of each monomer, methanol, and AIBN used in the polymerization were as presented in Table 1. Physical properties of PVAc-2 to 10 are shown in Table 2.

Production Example 9: Production of PVA-1

Into a 3-L reaction chamber equipped with a stirrer, a reflux condenser, a nitrogen feed port, an additive addition port, and an initiator addition port were charged 330.0 parts by mass of vinyl acetate, 100.0 parts by mass of acryloylmorpholine as the monomer (M), and 1,170.0 parts by mass of methanol, and after the temperature was raised to 60 °C, replacement with nitrogen gas in the system was carried out by nitrogen bubbling for 30 min. Polymerization was started by adding 2.0 parts by mass of 2,2'-azobis(4-methoxy-2,4-dimethylvaleronitrile) (AIBN). During the polymerization, the polymerization temperature of 60 °C was maintained, and after 4 hours when the degree of polymerization reached 50%, the polymerization was stopped by cooling. Next, unreacted vinyl acetate was eliminated under reduced pressure to give a solution of polyvinyl acetate in methanol. Saponification was performed by adding a solution of NaOH in methanol (10% by mass concentration) to the PVAc solution adjusted to 30% by mass, such that an NaOH molar ratio (the number of moles of NaOH/ the number of moles of the vinyl ester unit in PVAc) became 0.0005. The moisture content of the saponification solution was adjusted to 1% by mass. After the saponification, washing and drying were carried out to give the powder of the vinyl alcohol polymer (PVA-1). Physical properties of PVA-1 are shown in Table 2.

Production Examples 10 to 14, Comparative Production Example 3: Production of PVA-2 to PVA-7

PVA-2 to PVA-7 were each produced by a similar procedure to that of Production Example 9, except that the type of the monomer (M), using amount used of each monomer, methanol, and AIBN used in the polymerization, as well as the NaOH molar ratio in the saponification were as presented in Table 1. Physical properties of PVA-2 to PVA-7 are shown in Table 2.

Example 1

PVAc-1 as the polymer (A) was dissolved in water at 30 °C for 4 hrs to give an aqueous solution of Example 1 having a content of the polymer (A) of 37.5% by mass.

Examples 2 to 14

Each aqueous solution of Examples 2 to 14 was obtained by a similar procedure to that of Example 1 except that the type and the content of the polymer (A) were changed as shown in Table 2.

It is to be noted that in regard to PVAc-3 used as the polymer (A) in Example 3, the aqueous solution having a content of PVAc-3 being at least 35% by mass was able to be obtained by dissolving in water at 30 °C for 4 hrs. In other words, for each of the polymers (A) used in Examples, obtaining each aqueous solution having a content of the polymer (A) being at least 35% by mass was enabled.

Comparative Examples 1 to 3

Preparation of aqueous solutions each having a content of the polymer (A) being 40% by mass was attempted by a similar procedure to that of Example 1 except that the type of the polymer (A) was changed as shown in Table 2. However, a large amount of the polymer (A) was undissolved, thereby leading to a failure in obtaining the aqueous solution having a content of dissolved polymer (A) being at least 35% by mass.

Evaluations

Viscosity of Aqueous Solution

The viscosity was measured on each aqueous solution obtained in Examples 1 to 14. The measurement of the viscosity of the aqueous solution was conducted under conditions involving a rotor speed of 60 rpm and a temperature of 20 °C, by using a B-type viscometer BLII (spindle: LV-04) manufactured by Toki Sangyo Co., Ltd. Upon this evaluation, in the case in which the viscosity was 3,000 mPa·s or less, the viscosity was assessed as being sufficiently low. The results are shown in Table 2.

Suspension Polymerization of Vinyl Chloride

Suspension polymerization of vinyl chloride was carried out according to the following method by using, as a dispersant, each aqueous solution of Examples 1 to 14. It is to be noted that suspension polymerization was not conducted as for Comparative Examples 1 to 3, since preparation of the aqueous solution at a content of at least 35% by mass failed. Next, particles of each vinyl chloride polymer obtained were evaluated on the average particle diameter and the plasticizer absorption as described below. The results of the evaluations are shown in Table 2.

From each aqueous solution of Examples and Comparative Examples, an aliquot in an amount of 400 ppm in terms of the solid content of the solution with respect to vinyl chloride described later was taken. Each aqueous solution thus provided was diluted by adding deionized water thereto, whereby a first aqueous dispersant solution was obtained. 100 parts by mass of the first aqueous dispersant solution were charged into an autoclave having a volume of 5 L. Similarly, from an aqueous PVA solution in which commercially available PVA ("Kuraray Poval 48-80" manufactured by Kuraray Co., Ltd.,) was dissolved, an aliquot in an amount of 800 ppm in terms of the solid content of the aqueous PVA solution with respect to vinyl chloride was taken. The aqueous PVA solution thus provided was diluted by adding deionized water thereto, whereby a second aqueous dispersant solution was obtained. 100 parts by mass of the second aqueous dispersant solution were charged into the above-described autoclave. Next, deionized water was added to the autoclave such that a total of deionized water was 1,300 parts by mass.

Subsequently, 0.65 parts by mass of a 70% by mass toluene solution of cumyl peroxyneodecanoate, and 1.05 parts by mass of a 70% by mass toluene solution of t-butyl peroxyneodecanoate were charged into the autoclave. Degassing was performed to remove oxygen such that pressure inside the autoclave was 0.0067 MPa. Thereafter, 800 parts by mass of vinyl chloride were charged into the autoclave, and a temperature of the contents inside the autoclave was raised to 57 °C to start polymerization with stirring. At the time of starting the polymerization, the pressure inside the autoclave was 0.83 MPa. The polymerization was terminated when 3.5 hrs had passed from the start of the polymerization and the pressure inside the autoclave had reached 0.70 MPa, and unreacted vinyl chloride was removed. Subsequently, a polymerization slurry was taken out and drying was performed at 65 °C for 17 hrs to give vinyl chloride polymer particles.

(1) Average particle diameter of vinyl chloride polymer particles

A particle diameter distribution of the vinyl chloride polymer particles obtained was measured by a dry sieve analysis using a wire mesh with a Tyler mesh standard. Results thereof were plotted in accordance with the Rosin-Rammler distribution equation, and an average particle diameter ($d_{p50}$; median diameter) was calculated. In this evaluation, the case of the average particle diameter being 220 μm or less was determined as the average particle diameter not being large. In regard to Comparative Examples 3 and 5, the resultant vinyl chloride polymer particles formed blocks, and although the average particle diameter was not measured by the method described above, the average particle diameter was small.

(2) Plasticizer absorptivity of vinyl chloride polymer particles

A mass of a syringe having a volume of 5 mL, packed with 0.02 g of absorbent cotton, was weighed (defined as X (g)), and then a mass after charging thereinto 0.5 g of the vinyl chloride polymer particles was weighed (defined as Y (g)). Thereinto was charged 1 g of dioctyl phthalate (DOP), and the syringe was left to stand for 15 min. Subsequently, centrifugal separation was performed under conditions involving 3,000 rpm and 40 min to remove unabsorbed DOP, and a mass after removal was weighed (defined as Z (g)). Then, the plasticizer absorptivity (%) of the vinyl chloride polymer particles was determined by the following calculation formula. The plasticizer absorptivity being higher indicates that processing is easier, suggesting mainly that defects generated in the appearance, such as aggregates, are unlikely to appear during processing into a sheet. In this evaluation, the plasticizer absorptivity was assessed as being favorable in a case in which the plasticizer absorptivity was 20% or more.

$$\text{Plasticizer absorptivity (\%)} = 100 \times [\{Z - X) / (Y - X)\} - 1]$$

Table 1

| | Polymer (A) | Polymerization condition | | | | | | Saponification condition |
|---|---|---|---|---|---|---|---|---|
| | | vinyl acetate (parts by mass) | methanol (parts by mass) | monomer (M) | | AIBN (parts by mass) | conversion (%) | NaOH molar ratio |
| | | | | type | (parts by mass) | | | |
| Production Example 1 | PVAc-1 | 300.0 | 1,200.0 | acryloylmorpholine | 178.3 | 4.0 | 50 | - |
| Production Example 2 | PVAc-2 | 330.0 | 1,170.0 | acryloylmorpholine | 126.1 | 3.0 | 50 | - |
| Production Example 3 | PVAc-3 | 570.0 | 930.0 | acryloylmorpholine | 172.9 | 4.0 | 50 | - |
| Production Example 4 | PVAc-4 | 330.0 | 1,170.0 | N-vinyl-2-pyrrolidone | 186.6 | 3.0 | 50 | - |
| Production Example 5 | PVAc-5 | 330.0 | 1,170.0 | N-vinyl-2-pyrrolidone | 117.1 | 2.5 | 50 | - |
| Production Example 6 | PVAc-6 | 330.0 | 1,170.0 | PEO acrylate (n = 2) | 122.3 | 2.0 | 50 | - |
| Production Example 7 | PVAc-7 | 330.0 | 1,170.0 | PEO acrylate (n = 4.5) | 220.4 | 1.5 | 50 | - |
| Production Example 8 | PVAc-8 | 160.0 | 1,440.0 | PEO acrylate (n = 10) | 98.5 | 2.0 | 50 | - |
| Production Example 9 | PVA-1 | 330.0 | 1,170.0 | acryloylmorpholine | 100.0 | 2.0 | 50 | 0.0005 |
| Production Example 10 | PVA-2 | 330.0 | 1,170.0 | N-vinyl-2-pyrrolidone | 186.6 | 3.0 | 50 | 0.0010 |
| Production Example 11 | PVA-3 | 300.0 | 1,200.0 | PEO acrylate (n = 3) | 81.2 | 1.5 | 50 | 0.0075 |
| Production Example 12 | PVA-4 | 300.0 | 1,200.0 | PEO acrylate (n = 3) | 81.2 | 1.5 | 50 | 0.0040 |
| Production Example 13 | PVA-5 | 300.0 | 1,200.0 | PEO acrylate (n = 9) | 83.8 | 1.5 | 50 | 0.0050 |
| Production Example 14 | PVA-6 | 300.0 | 1,200.0 | PEO acrylate (n = 9) | 83.8 | 1.5 | 50 | 0.0010 |
| Comparative Production Example 1 | PVAc-9 | 270.0 | 1,230.0 | - | - | 1.0 | 50 | - |
| Comparative Production Example 2 | PVAc-10 | 270.0 | 1,230.0 | methyl acrylate | 34.8 | 1.0 | 50 | - |
| Comparative Production Example 3 | PVA-7 | 270.0 | 1,230.0 | - | - | 1.0 | 50 | 0.0010 |

It is to be noted that "n" in Table 1 is a value of n, when X in the formula (1) represents a polyethylene glycol group ($-O-(CH_2CH_2O)_n-H$).

Table 2

| | Polymer (A) | Physical properties | | | Evaluations of aqueous solution | | Evaluations of dispersant | |
|---|---|---|---|---|---|---|---|---|
| | | viscosity-average degree of polymerization | degree of modification (mol%) | degree of saponification (mol%) | content (mass%) | viscosity (mPa·s) | average particle diameter (μm) | plasticizer absorptivity (%) |
| Example 1 | PVAc-1 | 160 | 44.3 | 0.0 | 37.5 | 580 | 174.4 | 22.8 |
| Example 2 | PVAc-2 | 164 | 31.9 | 0.0 | 40.3 | 1,290 | 161.8 | 25.3 |
| Example 3 | PVAc-3 | 480 | 40.1 | 0.0 | 15.1 | 2,770 | 155.5 | 23.2 |
| Example 4 | PVAc-4 | 200 | 47.2 | 0.0 | 39.9 | 740 | 175.8 | 26.6 |
| Example 5 | PVAc-5 | 210 | 34.6 | 0.0 | 39.6 | 1,010 | 180.4 | 29.0 |
| Example 6 | PVAc-6 | 220 | 28.6 | 0.0 | 40.2 | 1,620 | 202.3 | 33.1 |
| Example 7 | PVAc-7 | 220 | 27.9 | 0.0 | 39.7 | 1,840 | 158.7 | 27.8 |
| Example 8 | PVAc-8 | 80 | 15.0 | 0.0 | 40.4 | 1,970 | 209.1 | 24.8 |
| Example 9 | PVA-1 | 170 | 21.9 | 45.7 | 39.2 | 1,330 | 159.9 | 24.7 |
| Example 10 | PVA-2 | 180 | 16.5 | 44.8 | 40.0 | 1,490 | 182.3 | 29.2 |
| Example 11 | PVA-3 | 205 | 11.6 | 57.8 | 40.1 | 1,150 | 169.5 | 23.1 |
| Example 12 | PVA-4 | 205 | 11.6 | 40.2 | 40.5 | 1,920 | 188.6 | 28.2 |
| Example 13 | PVA-5 | 227 | 4.5 | 67.2 | 40.3 | 1,890 | 172.4 | 24.5 |
| Example 14 | PVA-6 | 227 | 4.5 | 42.4 | 39.1 | 2,000 | 176.0 | 25.7 |
| Comparative Example 1 | PVAc-9 | 205 | - | 0.0 | insoluble | | - | - |
| Comparative Example 2 | PVAc-10 | 210 | 21.1 | 0.0 | insoluble | | - | - |
| Comparative Example 3 | PVA-7 | 205 | - | 55.5 | insoluble | | - | - |

As shown in Table 2, irrespective of having a high concentration, each aqueous solution of Examples 1 to 14 had a sufficiently low viscosity of 3,000 mPa·s or less. Furthermore, in the case in which suspension polymerization was carried out using each aqueous solution of Examples 1 to 14 as a dispersant, obtaining vinyl chloride polymer particles having a small average particle diameter and being favorable in plasticizer absorptivity was enabled. Each aqueous solution of Examples 1 to 14 was successfully verified to be useful as a dispersant for suspension polymerization. On the other hand, obtaining high-concentration aqueous solutions failed in Comparative Examples 1 to 3.

[INDUSTRIAL APPLICABILITY]

The aqueous solution of the present invention can be suitably used as a dispersant for suspension polymerization.

## Claims

1. An aqueous solution comprising a polymer (A) comprising a vinyl ester unit and a structural unit derived from a monomer (M),
wherein

 the monomer (M) is a monomer represented by the following formula (1), and
 a content of the polymer (A) is 15% by mass or more,

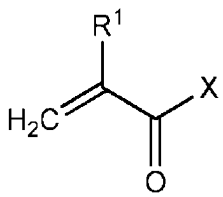

(1)

 wherein, in the formula (1), $R^1$ represents a hydrogen atom or a methyl group; and X represents a hydroxy group, an amino group, a morpholino group, or a polyethylene glycol group.

2. The aqueous solution according to claim 1, wherein a content of the structural unit derived from the monomer (M) in the polymer (A) is more than 8 mol% and 70 mol% or less with respect to total structural units.

3. The aqueous solution according to claim 1 or 2, wherein a solution obtained by dissolving 40 parts by mass of the polymer (A) in 60 parts by mass of water has a viscosity at 20 °C of 2,000 mPa·s or less.

4. The aqueous solution according to claim 1 or 2, wherein

 the polymer (A) comprises a vinyl alcohol unit and has a degree of saponification of less than 70 mol%, or
 the polymer (A) does not comprise a vinyl alcohol unit.

5. The aqueous solution according to claim 1 or 2, wherein the polymer (A) has a viscosity-average degree of polymerization of 30 to 2,000.

6. The aqueous solution according to claim 1 or 2, wherein a total content of: the vinyl ester unit in the polymer (A); the structural unit derived from the monomer (M); and a vinyl alcohol unit which is an arbitrary structural unit is 90 mol% or more with respect to total structural units of the polymer (A).

7. The aqueous solution according to claim 1 or 2, having a viscosity at 20 °C of 2,000 mPa·s or less.

8. The aqueous solution according to claim 1 or 2, wherein a content of the polymer (A) with respect to a total amount of solid matter is 90% by mass or more.

9. A dispersant for suspension polymerization comprising the aqueous solution according to claim 1 or 2.

10. A dispersant for suspension polymerization which comprises an aqueous solution comprising a polymer (A)

comprising a vinyl ester unit and a structural unit derived from a monomer (M), wherein

the monomer (M) is at least one selected from the group consisting of a monomer represented by the following formula (1) and a monomer represented by the following formula (2), and
a content of the polymer (A) in the aqueous solution is 15% by mass or more,

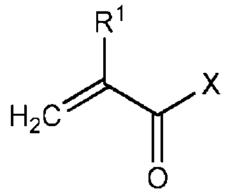

(1)

wherein, in the formula (1), $R^1$ represents a hydrogen atom or a methyl group; and X represents a hydroxy group, an amino group, a morpholino group, or a polyethylene glycol group, and

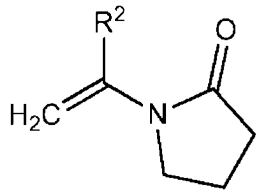

(2)

in the formula (2), $R^2$ represents a hydrogen atom or a methyl group.

## INTERNATIONAL SEARCH REPORT

International application No. **PCT/JP2024/027839**

**A. CLASSIFICATION OF SUBJECT MATTER**

***C08F 218/04***(2006.01)i; ***C08F 8/12***(2006.01)i; ***C08F 220/00***(2006.01)i; ***C08L 29/04***(2006.01)i
FI: C08F218/04; C08F220/00; C08F8/12; C08L29/04 Z

According to International Patent Classification (IPC) or to both national classification and IPC

**B. FIELDS SEARCHED**

Minimum documentation searched (classification system followed by classification symbols)

C08F218/04; C08F8/12; C08F220/00; C08L29/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | JP 47-13966 B1 (ZEON CORPORATION) 26 April 1972 (1972-04-26) claims, column 3, second paragraph, example 1 | 1-10 |
| Y | | 9-10 |
| X | JP 55-29579 A (DENKI KAGAKU KOGYO KABUSHIKI KAISHA) 01 March 1980 (1980-03-01) claims, page 2, upper right column, first paragraph, examples 1, 2 | 1, 3-10 |
| Y | | 9-10 |
| A | | 2 |
| X | US 2290600 A (ROHM & HAAS COMPANY) 21 July 1942 (1942-07-21) claims 1-4, page 1, left column, second and third paragraphs, page 2, left column, first paragraph, page 3, right column, third and fourth paragraphs | 1-8 |
| Y | | 9-10 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 September 2024** | **01 October 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No. **PCT/JP2024/027839**

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 54-138036 A (THE NIPPON SYNTHETIC CHEMICAL INDUSTRY CO., LTD.) 26 October 1979 (1979-10-26)<br>claims 1, 4, 5, page 1, lower right column, second paragraph, examples, table 1 | 1-8<br>9-10 |
| X<br>Y | JP 54-139945 A (THE NIPPON SYNTHETIC CHEMICAL INDUSTRY CO., LTD.) 30 October 1979 (1979-10-30)<br>claims 1-3, page 1, lower right column, first paragraph, examples, table 1 | 1-8<br>9-10 |
| X<br>Y | JP 59-155411 A (THE NIPPON SYNTHETIC CHEMICAL INDUSTRY CO., LTD.) 04 September 1984 (1984-09-04)<br>claims 1, 2, page 1, lower right column, third paragraph, page 2, upper left column, third paragraph, page 2, lower right column, second paragraph, page 3, upper left column, second paragraph, page 3, upper right column, third paragraph to lower left column, first paragraph, page 3, lower right column, third paragraph, example 3 | 1-10<br>9-10 |
| A | JP 31-7540 B1 (KANEKA CORPORATION) 31 August 1956 (1956-08-31) | 1-10 |
| A | JP 57-119902 A (KURARAY CO., LTD.) 26 July 1982 (1982-07-26) | 1-10 |

Form PCT/ISA/210 (second sheet) (July 2022)

**INTERNATIONAL SEARCH REPORT**
**Information on patent family members**

International application No.
**PCT/JP2024/027839**

| Patent document cited in search report | Publication date (day/month/year) | Patent family member(s) | Publication date (day/month/year) |
|---|---|---|---|
| JP 47-13966 B1 | 26 April 1972 | (Family: none) | |
| JP 55-29579 A | 01 March 1980 | (Family: none) | |
| US 2290600 A | 21 July 1942 | (Family: none) | |
| JP 54-138036 A | 26 October 1979 | (Family: none) | |
| JP 54-139945 A | 30 October 1979 | (Family: none) | |
| JP 59-155411 A | 04 September 1984 | (Family: none) | |
| JP 31-7540 B1 | 31 August 1956 | (Family: none) | |
| JP 57-119902 A | 26 July 1982 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2021100638 A